# EUROPEAN PATENT SPECIFICATION

(11) **EP 0 278 301 B1**
(45) Date of publication and mention of the grant of the patent: **18.11.1993**
(21) Application number: 88101035.9
(22) Date of filing: 25.01.1988
(51) Int. Cl.: F16K 3/08, A61H 9/00

(54) **Air flow regulating and noise reducing assembly specifically for hydromassage equipments**
Luftregel- und Geräuschmindereinrichtung insbesondere für Wassermassageausrüstungen
Dispositif de réglage de l'air et d'amortissage des bruits, notamment pour l'équipement d'hydromassage

(30) Priority: 26.01.1987 IT 1915987
(43) Date of publication of application: 17.08.1988
(73) Proprietor: Jacuzzi Europe Spa, 33098 Valvasone (Pordenone) (IT)
(72) Inventor: Soissons, Emanuele Villafranca, I-33098 Valvasone (Pordenone) (IT)
(74) Representative: Prüfer, Lutz H., Dipl.-Phys.

(56) References cited:
- EP-A- 0 065 266
- DE-A- 2 439 220
- DE-A- 3 142 510
- DE-A- 3 309 546
- GB-A- 810 505
- GB-A- 1 533 073
- US-A- 2 974 745
- US-A- 4 415 003

## Description

The present invention relates to an air flow regulating assembly according to the preamble of claim 1, having special but not exclusive utilization in hydromassage equipments used in bathing tubs or the like.

Hydromassage equipments utilized in bathing tubs, consisting in an electric motor-pump assembly, are widely known. Said electric motor-pump assemblies suck water from a bathing tub admitting it again, under adjustable pressure, generally mixed with air bubbles, through nozzles usually under the water level in the tub in order to obtain the hygenical practice known as hydromassage. Such an equipment is known from e.g. the DE-A-24 39 220.

Specifically this equipment consists of a motor-pump sucking water from a bathing tub bottom and readmitting it under pressure through nozzles properly arranged around the tub, selected according to criteria well known to people skilled in this specifical art, mixed with air sucked by ejectors set into said nozzles and connected, as regards the water to be readmitted in the tub, with said motor pump and, as regards the air to be mixed with water, with at least an air input well above the highest level of the water in said tub, connected to said nozzles by at least a duct.

Now it is to remark that the above mentioned air input is an intensive noise source, partially due to the motor-pump actuation and partially due to the first incoming of the air as bubbles in the water, successively emitted by said nozzles, said noise being coupled to said air input through the duct connecting said air input to said nozzles.

As this noise can reach very troublesome levels, there is the need to reduce it to a minimum through an assembly interferring as little as possible with the air flow capacity.

The problem of reducing the noise is solved by an air flow regulating assembly with the features of claim 1.

Preferred embodiments are characterized in the subclaims.

The features and the advantages of the present invention will be apparent from the following detailed description of its embodiments, given for exemplary but not limiting purposes, in consideration with the enclosed drawing figures in which similar components are given like numerals and in which:
fig. 1 is a sectional view in vertical elevation of a first embodiment of the invention;
fig. 2 is a view taken along line II-II of figure 1;
fig. 3 is a sectional view in vertical elevation of an alternate embodiment of the invention; and
fig. 4 is a view take along line IV-IV of figure 3.

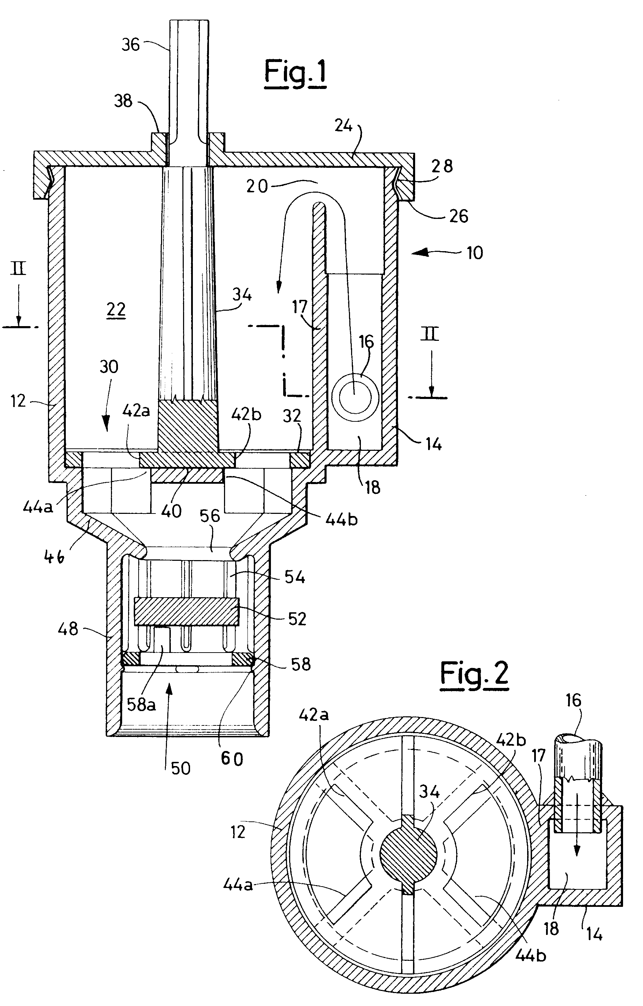

Presently considering the first embodiment of the invention, depicted in figures 1 and 2 , an air flow regulating and noise reducing assembly 10, comprises an essentially cylindrical box 12, generally consisting of molded plastic material at a side of a more restriced box 14, having essentially parallelepipedal shape, of substantially the same lenght of the cylindrical box 12 provided with an input duct 16 connected with the external environmental air and defining a passage 18 connected, through an opening 20 in a wall 17, with an enlarged chamber 22 defined by said cylindrical box 12. The assembly comprising the boxes 12 and 14 is closed by a cover 24 provided with an downward rib 26 comprising a relief 28 to be engaged by a corresponding groove near the upper edge of the boxes 12 and 14.

On the bottom of the enlarged chamber 22 a flow regulating sliding valve 30 is housed comprising a first disk 32 connected with a shaft 34 coming out by means of an extension 36, to possibly receive a knob, through a hole 38 in said cover 24.

The disk 32 of the valve 30 leans against a seat 40 comprised by the bottom of the cylindrical box 12 and is provided with openings 42a, 42b, which can be superimposed on corresponding openings 44a, 44b, through the seat 40 on which leans the disk 32.

The bottom of the cylindrical box 12 is continued by a substantially funnel shaped extension 46 ending downwards with a hollow connecting sleeve 48 provided to house a check valve 50 having, above all, the duty of preventing a water coming back into the chamber 22 of the flow regulating and noise reducing assembly 10. Said valve 50 comprises essentially a disk 52 of semi-rigid resilient material, having a specific weight lower than water which, when guided by inside extending ribs, as the rib 54, can move to lean against an opening 56 connected with the inside of the funnel extension 46, closing said opening 56, or against a ring 58, provided with one or more stopping studs 58a, leaning against a circular rib 60 inside the connecting sleeve 48, stopping the disk 52 against said stud 58a to have a free connection between the chamber 22 and the duct connected with the sleeve 48.

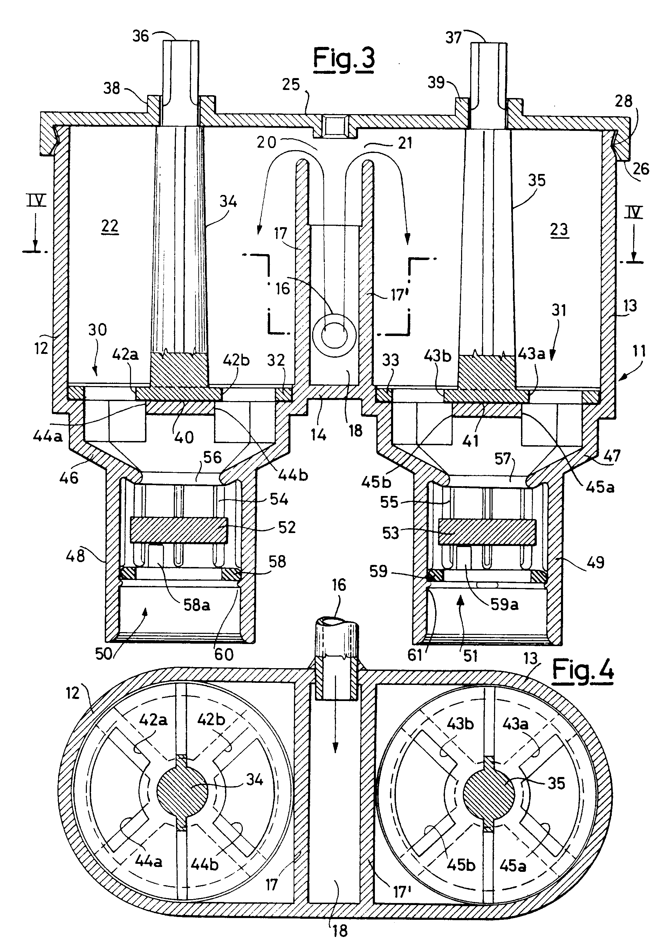

An alternative embodiment of the present invention is depicted by figures 3 and 4.

As depicted in said figures 3 and 4, an air flow regulating and noise reducing assembly 11 is manufactured according to a substantially double embodiment with respect to the assembly 10 in figures 1 and 2. In fact, said assembly 11 comprises two substantially half-cylindrical boxes 12 and 13 each other facing with their planar portions to form an intermediate substantially parallelepipedal box 14 having a lenght substantially equal to the two cylindrical boxes 12 and 13. Said parallelepipedal box 14 is provided with an air input duct 16 and defines a passage 18 connected by means of the openings 20 and 21, through the walls 17 and 17', with the enlarged chambers 22 and 23 defined by the half cylindrical boxes 12 and 13 , respectively. The assembly comprising the boxes 12, 13 and 14 is closed by a cover 25 provided with a downward rib 26 comprising a relief 28 engaging a corresponding groove near the upper edge of the boxes 12, 13 and 14.

On the bottom of the enlarged chambers 22 and 23 two flow regulating sliding valves 30,31 are housed, comprising first disks 32 and 33 connected with shafts 34 and 35, coming out by means of extensions 36 and 37, possibly receiving knobs through holes 38 and 39 in said cover 25.

The disks 32 and 33 of the valves 30 and 31 lean against seats 40 and 41 comprised by the bottoms of the half-cylindrical boxes 12 and 13, respectively and are provided with openings 42a, 42b, 43a and 43b which can be superimposed on corresponding openings 44a,44b, 45a and 45b through the seats 40 and 41 against which lean the disks 32 and 33, respectively.

The bottoms of the half cylindrical boxes 12 and 13 are continued by substantially funnel shaped extensions 46 and 47, ending downwards with hollow connecting sleeves 48 and 49 provided to house check valves 50 and 51 having, above all, the duty of preventing a water coming back into the chambers 22 and 23 of the flow regulating and noise reducing assembly 11. Said valves 50 and 51 comprise essentially disks 52 and 53 of semi-rigid and resilient material, having a specific weight lower than water which when guided by inside extending ribs, as the ribs 54 and 55, can move to lean against openings 56 and 57 connected with the inside of the funnel extensions 46 and 47, by closing said openings 56 and 57, or against rings 58 and 59, provided with one or more stopping studs 58a and 59a, leaning on circular ribs 60 and 61 inside the connecting sleeves 48 and 49, stopping the disks 52 and 53 against said studs 58a and 59a to have a free connection between the chambers 22 and 23 and the ducts connected with the sleeves 48 and 49.

The operation of the present inventions is considered with reference to the embodiment of figures 1 and 2, being meant that the embodiment of figures 3 and 4 operates in a like way.

The air coming in through the input duct 16 into the passage 18 turns around the wall 17 through the opening 20 into the enlarged chamber 22. From here flows through the opening pairs 42a, 42b and 44a, and 44b, of the sliding valve 30 in the funnel extension 46 and then into the sleeve 48 connected with the intake ducts of the hydromassage nozzles. In accordance with the position of the disk 32 of the valve 30 on its seat 40 the openings 42a, 42b and 44a, 44b, are more or less coincident being the net area of the air passage varied and thus regulating the air flow through the valve 30.

The check valve 50 allows an air passage to the hydromassage equipment, while, owing to the floating disk 52, prevents that possible water, rising into the ducts when said hydromassage equipment is inoperative , comes back into the valve 30 and then into the enlarged chamber 22.

The succession of restrictions and enlargements in the flow regulating and noise reducing assembly 10 in figures 1 and 2 contributes to a reduction of the noise produced by the hydromassage equipment and transmitted through the intake ducts to the air input duct 16 and then to the environment.

In fact, said noise meets a first restriction due to the disk 52 of the check valve 50, followed by a small enlargement due to the funnel 46 and then a second restriction due to the flow regulating valve 30, then a sudden and substantial enlargement due to the enlarged chamber 22, followed by the restriction due to the opening 20 and the passage 18, ending with the input duct 16 leading to the environment , being subject to sound power dissipation in the valves 50 and 30, and in the passage 18 and to a pressure levelling into the funnel 48, and above all, into the enlarged chamber 22. These combined sound power dissipation and pressure levelling action produces a substantial reduction of the noise coming from hydromassage equipment which can amount to the 70% of the starting noise level.

In this connection it is to remark that many noise reducing means can be added to enhance the noise reduction of the present invention. For example, the internal face of the cover 24 in figure 1 or the cover 25 in figure 3 can be manufactured with coarse or anyway uneven surface finishing or shaped with pyramidal reliefs or the like, in order to enhance sound power scattering and dissipation. Likewise the passage 18 can have lateral walls anyway step shaped, restricting the cross section area by going from the cover 24 or 25 to the input duct 16, axially rifled or grooved, or both, in order to help sound scattering and dissipation.

Further, always in order to enhance the sound power scattering into the passage 18, it is possible to insert, leaning against some support means provided with or fastened to the lateral walls, some noise reducing means, such as screens, pierced plates, labyrinth duct members, or the like.

## Claims

1. Air flow regulating assembly (10; 11) to be connected to an air intake of, for example, at least an ejector nozzle for hydro-massage, comprising:
an air input duct (16) for sucking air from the environment into said air flow regulating assembly (10; 11);
a passage (18) connected to an outlet of said air input duct (16);
at least an expansion chamber (22; 22, 23) connected to an outlet opening (20; 20, 21) of said passage (18);
at least an adjustable flow control valve (30; 30, 31) connected to an output side of said at least one expansion chamber (22; 22, 23); and
at least a check valve means (50; 50, 51) for allowing fluid passage only in one direction from said air input duct (16) to said air intake of said, for example, at least one ejector nozzle;
characterized in that the cross section area of said passage (18) is larger than the cross section area of said air input duct (16);
the cross section area of the outlet opening (20; 20, 21) is narrower than the cross section area of said passage (18) and also narrower than the cross section area of the at least one expansion chamber (22; 22, 23) and
said at least one check valve means (50; 50, 51) is connected between said at least one flow control valve (30; 30, 31) and said air intake of said, for example, at least one ejector nozzle.

2. Air flow regulating assembly, according to claim 1, characterized in that said adjustable flow control valve (30; 30, 31) is a sliding valve essentially comprising a disk (32; 32, 33), movable by rotation around its axis provided with at least a window (42; 42, 43) which can be more or less completely superimposed on a corresponding window (44; 44, 45), through a support seat (40; 40, 41) for said disk (32; 32, 33), in order to embody said flow regulation.

3. Air flow regulating assembly, according to claim 2 characterized in that said disk (32; 32, 33) is provided with two windows (42a, 42b; 42a, 42b, 43a, 43b) which can be superimposed on two corresponding windows (44a, 44b; 44a, 44b, 45a, 45b) through the support seat (40; 40, 41) for said disk (32; 32, 33).

4. Air flow regulating assembly, according to claim 2, characterized in that the movable disk (32; 32, 33) is provided with more than two windows, which can be superimposed on at least an equal number of corresponding windows through the support seat (40; 40, 41) for the disk (32; 32, 33).

5. Air flow regulating assembly, according to claim 1 or 2, characterized in that said check valve means (50; 50, 51) comprise a resilient disk (52; 52, 53) movable along essentially axial guides (54; 54, 55) to a valve seat between closed and open positions.

6. Air flow regulating assembly, according to claim 5, characterized in that said resilient disk (52; 52, 53) comprises a material having specific weight lower than water, in order to possibly float, and the valve seat is vertically arranged with an upper opening (56; 56, 57) connected with said flow control valve (30; 30, 31), and said expansion chamber (22; 22, 23) and a lower opening connected with said air intake of said, for example, at least one ejector nozzle.

7. Air flow regulating assembly according to claim 6, characterized in that said lower opening is provided with a ring (58; 58, 59) having one or more support studs (58a; 58a, 59a) against which the disk (52; 52, 53) of the check valve means (50; 50, 51) can lean without interferring with the air passage through said check valve means (50; 50, 51).

8. Air flow regulating assembly, according to one of claims 1-7, characterized in that the internal face of a cover (24; 25), common to said expansion chamber (22; 23) and the passage (18) is provided with a coarse surface finishing or with reliefs in order to enhance scattering and dissipation of sound power.

9. Air flow regulating assembly, according to one of claims 1-8, characterized in that the lateral walls of the passage (18) are shaped with steps restricting the cross section area by going from a cover (24; 25), common to said expansion chamber (22; 23) and said restricted passage (18) to the input duct (16), either axially rifled or grooved, or both, in order to promote sound scattering and dissipation.

10. Air flow regulating assembly, according to one of claims 1-8, characterized in that noise reducing means, such as screens , pierced plates, labyrinth duct members, or the like are inserted in said passage (18).

11. Air flow regulating assembly according to one of claims 1 to 10, characterized in that said passage (18) is connected to two expansion chambers (22, 23) each being connected to an adjustable flow control valve (30, 31), respectively.

## Patentansprüche

1. Luftflußreguliereinrichtung (10; 11), die mit einem Lufteinlaß von zum Beispiel mindestens einer Ejektordüse für Unterwassermassage zu verwenden ist, mit:
einer Lufteingangsleitung (16) zum Ansaugen von Luft von der Umgebung in die Luftflußreguliereinrichtung (10; 11);
einem mit einem Auslaß der Lufteingangsleitung (16) verbundenen Durchgang (18);
mindestens einer mit einer Auslaßöffnung (20; 20, 21) des Durchganges (18) verbundenen Expansionskammer (22; 22, 23);
mindestens einem mit einer Ausgangsseite der mindestens einen Expansionskammer (22; 22, 23) verbundenen einstellbaren Flußsteuerventil (30; 30, 31);
mindestens einem Rückschlagventilmittel (50; 50, 51) zum Ermöglichen eines Fluiddurchganges nur in eine Richtung von der Lufteingangsleitung (16) zu dem Lufteinlaß von z.B. der mindestens einen Ejektordüse;
dadurch gekennzeichnet, daß die Querschnittsfläche des Durchganges (18) größer als die Querschnittsfläche der Lufteingangsleitung (16) ist;
die Querschnittsfläche der Auslaßöffnung (20; 20, 21) schmaler als die Querschnittsfläche des Durchganges (18) und auch schmaler als die Querschnittsfläche der mindestens einen Expansionskammer (22; 22, 23) ist und
das mindestens eine Rückschlagventilmittel (50; 50, 51) zwischen dem mindestens einen Flußsteuerventil (30; 30, 31) und dem Lufteinlaß der z.B. mindestens eines Ejektordüse verbunden ist.

2. Luftflußreguliereinrichtung nach Anspruch 1,
dadurch gekennzeichnet, daß das einstellbare Flußteuerventil (30; 30, 31) ein Schiebeventil ist, das im wesentlichen eine Scheibe (32; 32, 33) aufweist, die durch Drehung um ihre Achse bewegbar ist und mindestens eine Öffnung (42; 42, 43) aufweist, die mehr oder weniger vollständig einer entsprechenden Öffnung (44; 44, 45) durch einen Tragsitz (40; 40, 41) für die Scheibe (32; 32, 33) zum Ausführen der Flußsteuerung überlagerbar ist.

3. Luftflußreguliereinrichtung nach Anspruch 2,
dadurch gekennzeichnet, daß die Scheibe (32; 32, 33) mit zwei Öffnungen (42a, 42b; 42a, 42, 43a, 43b) versehen ist, die zwei entsprechenden Öffnungen (44a, 44b; 44a, 44b; 45a, 45b) durch den Tragsitz (40; 40, 41) für die Scheibe (32; 32, 33) überlagerbar ist.

4. Luftflußreguliereinrichtung nach Anspruch 2,
dadurch gekennzeichnet, daß die bewegbare Scheibe (32; 32, 33) mit mehr als zwei Öffnungen versehen ist, die mindestens einer gleichen Zahl von entsprechenden Öffnungen durch den Tragsitz (40; 40, 41) für die Scheibe (32; 32, 33) überlagerbar sind.

5. Luftflußreguliereinrichtung nach Anspruch 1 oder 2,
dadurch gekennzeichnet, daß das Rückschlagventilmittel (50; 50, 51) eine nachgiebige Scheibe (52; 52, 53) aufweist, die bewegbar entlang im wesentlichen axialer Führungen (54; 54, 55) zu einem Ventilsitz zwischen einer geschlossenen und einer offenen Position ist.

6. Luftflußreguliereinrichtung nach Anspruch 5,
dadurch gekennzeichnet, daß die nachgiebige Scheibe (52; 52, 53) ein Material mit einem spezifischen Gewicht kleiner als Wasser aufweist, damit sie schwimmen kann, und der Ventilsitz vertikal mit einer oberen Öffnung (56; 56, 57) angeordnet ist, die mit dem Flußsteuerventil (30; 30, 31) und der Expansionskammer (22; 22, 23) verbunden ist, und einer unteren Öffnung, die mit dem Lufteinlaß der z.B. mindestens einen Ejektordüse verbunden ist.

7. Luftflußreguliereinrichtung nach Anspruch 6,
dadurch gekennzeichnet, daß die untere Öffnung mit einem Ring (58; 58, 59) mit einem oderen mehreren Anschlagvorsprüngen (58a; 58a, 59a) versehen ist, gegen die die Scheibe (52; 52, 53) des Rückschlagventilmittels (50; 50, 51) lehnen kann, ohne daß der Luftdurchgang durch das Rückschlagventilmittel (50; 50, 51) gestört wird.

8. Luftflußreguliereinrichtung nach einem der Ansprüche 1 bis 7,
dadurch gekennzeichnet, daß die innere Fläche einer Abdeckung (24; 25), die der Expansionskammer (22; 23) und dem Durchgang (18) gemeinsam ist, mit einer rauhen Oberflächenbearbeitung oder Erhöhungen versehen ist, damit die Steuerung und der Verlust von Schalleistung verstärkt wird.

9. Luftflußreguliereinrichtung nach einem der Ansprüche 1 bis 8,
dadurch gekennzeichnet, daß die Seitenwände des Durchganges (18) mit Stufen geformt sind, die die Querschnittsfläche auf dem Weg von einer Abdeckung (24; 25), die der Expansionskammer (22; 23) und dem Durchgang (18) gemeinsam ist, zu der Eingangsleitung (16) einengen, entweder durch axiale Riffeln oder Rillen oder beidem zum Verstärken der Schallstreuung und des Verlustes.

10. Luftflußreguliereinrichtung nach einem der Ansprüche 1 bis 8,
dadurch gekennzeichnet, daß Geräuschverringerungsmittel wie Abschirmungen, durchlöcherte Platten, Labyrinthleitungsteile oder ähnliches in den Durchgang (18) eingesetzt sind.

11. Luftflußreguliereinrichtung nach einem der Ansprüche 1 bis 10,
dadurch gekennzeichnet, daß der Durchgang (18) mit zwei Expansionskammern (22, 23) verbunden ist, von denen jede mit einem entsprechenden einstellbaren Flußsteuerventil (30, 31) verbunden ist.

## Revendications

1. Dispositif de réglage de l'air (10; 11) à raccorder à une entrée d'air d'au moins une tuyère d'éjection d'hydromassage, par exemple, comprenant:
un conduit d'entrée d'air (16) pour l'aspiration de l'air ambiant dans ledit dispositif de réglage de l'air (10; 11);
un passage (18) raccordé à une sortie dudit conduit d'entrée d'air (16);
au moins une chambre de détente (22; 22, 23) raccordée à un orifice de sortie (20; 20, 21) dudit passage (18);
au moins un régulateur d'écoulement ajustable (30; 30, 31) raccordé à un côté de sortie de ladite au moins une chambre de détente (22; 22,23); et
au moins un moyens à soupape de retenue (50; 50, 51) qui permet le passage du fluide seulement unidirectionnel dudit conduit d'entrée d'air (16) vers ladite entrée d'air d'au moins une tuyère d'éjection, par exemple;
**caractérisé** en ce que l'aire dudit passage (18) est plus grande que l'aire dudit conduit d'entrée d'air (16);
que l'aire dudit orifice de sortie (20; 20, 21) est plus étroite que l'aire dudit passage (18) et aussi plus étroite que l'aire de ladite au moins une chambre de détente (22; 22, 23), et
en ce que ledit moyen à soupape de retenue (50; 50, 51) est branché entre ledit au moins un régulateur d'écoulement (30; 30, 31) et ladite entrée d'air d'au moins une tuyère d'éjection, par exemple.

2. Dispositif de réglage de l'air selon la revendication 1,
**caractérisé** en ce que ledit régulateur d'écoulement ajustable (30; 30, 31) est une soupape à coulisse comprenant essentiellement une disque (32; 32, 33) mobile en rotation autour son axe équipé d'au moins une fenêtre (42, 42, 43) appropriée à être plus ou moins complètement surplombante sur une fenêtre correspondante (44; 44, 45) par une surface d'appui (40; 40, 41) de ladite disque (32; 32, 33) afin de réaliser ledit régulateur d'écoulement.

3. Dispositif de réglage de l'air selon la revendication 2,
**caractérisé** en ce que ladite disque (32; 32, 33) comprend deux fenêtres (42a, 42b; 42a, 42b, 43a, 43b) appropriées à être surplombante sur deux fenêtres correspondantes (44a, 44b; 44a, 44b, 45a, 45b) par ladite surface d'appui (40; 40, 41) de ladite disque (32; 32, 33).

4. Dispositif de réglage de l'air selon la revendication 2,
**caractérisé** en ce que ladite disque mobile (32; 32, 33) comprend plus que deux fenêtres appropriées à être surplombante sur des fenêtres correspondantes en nombre au moins égal, par ladite surface d'appui (40; 40, 41) de ladite disque (32; 32, 33).

5. Dispositif de réglage de l'air selon la revendication 1 ou 2,
**caractérisé** en ce que ledit moyen à soupape de retenue (50; 50, 51) comprend une disque élastique (52; 52, 53) mobile le long des guides essentiellement axiaux (54; 54, 55) vers surface d'obturation entre une position fermée et une position ouverte.

6. Dispositif de réglage de l'air selon la revendication 5,
**caractérisé** en ce que ladite disque élastique (52; 52, 53) comprend un matériau ayant un poids volumique plus bas que le poids volumique de l'eau, pour flotter éventuellement, et en ce que ladite surface d'obturation est disposée en position verticale et présente une ouverture supérieure (56; 56, 57) reliée audit régulateur d'écoulement (30; 30, 31) et ladite chambre de détente (22; 22, 23), ainsi qu'une ouverture inférieure reliée à ladite entrée d'air de ladite au moins une tuyère d'éjection, par exemple.

7. Dispositif de réglage de l'air selon la revendication 6,
**caractérisé** en ce que ladite ouverture inférieure présente un anneau (58; 58, 59) à un ou plus appuis (58a; 58a, 59a) contre lesquels ladite disque (52; 52, 53) dudit moyens à soupape de retenue (50; 50, 51) peut s'appuyer sans gêner le passage d'air par ledit moyens à soupape de retenue (50; 50, 51).

8. Dispositif de réglage de l'air selon une quelconque des revendications 1 à 7,
**caractérisé** en ce que la surface intérieure d'un couvercle (24; 25) de ladite chambre de détente (22; 23) en commun avec audit passage (18) présente une superficie de nature rugueuse ou en relief afin d'améliorer la dispersion et dissipation de l'énergie acoustique.

9. Dispositif de réglage de l'air selon une quelconque des revendications 1 à 8,
**caractérisé** en ce que les parois latérales dudit passage (18) sont formées à gradins pour étrangler l'aire, en passant d'un couvercle (24; 25) de ladite chambre de détente (22; 23) en commun avec audit passage étranglé (17) vers ledit conduit d'entrée (16), à configuration axiale soit crantée et/ou rainurée, afin d'aider la dispersion et dissipation de son.

10. Dispositif de réglage de l'air selon une quelconque des revendications 1 à 8,
**caractérisé** en ce que des moyens d'amortissement de bruit comme des réflecteurs, plaques à trous, éléments de conduit à labyrinthe, ou éléments similaires sont placés dans ledit passage (18).

11. Dispositif de réglage de l'air selon une quelconque des revendications 1 à 10,
**caractérisé** en ce que ledit passage (18) est raccordé à deux chambres de détente (22, 23) dont chacune est raccordée à un régulateur d'écoulement ajustable (30, 31) respectif.
